# EUROPÄISCHE PATENTSCHRIFT

(11) **EP 1 604 899 B1**
(45) Veröffentlichungstag und Bekanntmachung des Hinweises auf die Patenterteilung: **13.05.2009**
(21) Anmeldenummer: 05012370.2
(22) Anmeldetag: 08.06.2005
(51) Int. Cl.: B64D 13/08, F24F 6/04

(54) **Verdampferanordnung für ein Klimasystem eines Flugzeugs und ihr Verfahren zum Betreiben**
Evaporator assembly for an aircraft environmental control system and its method of operation
Ensemble de vaporisateur pour climatiseur d'aéronef et procédé pour son opération.

(30) Priorität: 09.06.2004 DE 102004028037; 09.06.2004 US 578419 P
(43) Veröffentlichungstag der Anmeldung: 14.12.2005
(73) Patentinhaber: Airbus Deutschland GmbH, 21129 Hamburg (DE)
(72) Erfinder: Kulcke, Walter, Dr., 21635 Jork (DE); Scherer, Thomas, Dr., 22559 Hamburg (DE)
(74) Vertreter: Maiwald Patentanwalts GmbH

(56) Entgegenhaltungen:
- EP-A2- 0 301 212
- DE-A- 10 000 921
- DE-A1- 1 779 002
- FR-A3- 2 530 968
- GB-A- 325 515
- US-A- 2 144 693
- US-A- 3 464 400
- US-A- 4 803 849
- US-A- 5 037 585

## Beschreibung

Die vorliegende Erfindung betrifft eine Verdampferanordnung für ein Klimasystem eines Flugzeugs, ein Klimasystem für ein Flugzeug, ein Verdampferpad zur Verwendung in einem Direktverdampfer in einem Klimasystem eines Flugzeugs sowie ein Verfahren zum Betreiben einer Verdampferanordnung für ein Klimasystem eines Flugzeugs.

Besonders in bedruckten Kabinen von Verkehrs- und Transportflugzeugen kann die Luftfeuchtigkeit während des Fluges absinken. Beispielsweise kann die Luftfeuchtigkeit auf bis zu 3 % relative Feuchte (% RH) bei Raumtemperatur absinken. Solch eine geringe Luftfeuchtigkeit kann von Personen als unkomfortabel angesehen werden.

Um den thermischen Komfort zu verbessern, kann die Kabinenluft teilweise oder komplett befeuchtet werden. Die US 5,359,692 betreibt ein System, welches elektrische Energie zum Verdampfen von Wasser verwendet. Die US 4,272,014 und EP 0 013170 beschreiben Systeme, in denen Heißluft verwendet wird, um Wasser zu verdampfen. Anschließend wird bei diesen Systemen der Wasserdampf mit der abgekühlten Luft vermischt und der Klimaanlage zugeführt. Der Nachteil dieser Systeme kann eine Erhöhung der Wärmelast in der Kabine durch die Vermischung von Wasserdampf mit heißer Luft sein.

Ferner gibt es auf dem Prinzip der kalten Verdampfung basierende Luftbefeuchter, wie beispielsweise den in der US 5,595,690 beschriebenen Membranbefeuchter. Die EP 0 779 207 B1 beschreibt einen Zerstäuber und einen Verdampfer mit einem porösen Tropfkörper.

Die GB 325 515, die alle Merkmale des Oberbegriffs der unabhängigen Ansprüche 1 und 12 offenbart, beschreibt ein Klimaanlagen- und Ventilationssystem mit einem Klimaanlagengerät durch das die Luft geleitet werden kann oder an dem die Luft vorbeigeführt werden kann.

Die US 2 144 693 beschreibt ein Verfahren und eine Vorrichtung zur Steuerung eines Klimaanlagensystems. Dabei wird Außenluft in Abhängigkeit von einer Feuchttemperatur zum Teil durch einen Klimaanlagenapparat geleitet und der Rest der Luft an dem Klimaanlagenapparat vorbeigeführt.

Insbesondere im Flugzeugbau ist eine hohe Zuverlässigkeit der einzelnen Komponenten erforderlich.

Es ist eine Aufgabe der vorliegenden Erfindung, eine Verdampferanordnung für ein Klimasystem eines Flugzeugs anzugeben, das eine hohe Zuverlässigkeit aufweist.

Gemäß der vorliegenden Erfindung (Anspruch 1) kann die obige Aufgabe mittels einer Verdampferanordnung für ein Klimasystem eines Flugzeugs gelöst werden, umfassend einen Hauptluftkanal, einen Bypasskanal und einen Verdampfer. Der Verdampfer ist in dem Hauptkanal derart angeordnet, dass ein Luftstrom in dem Hauptkanal den Verdampfer durchströmt. Bei Bedarf kann der Bypasskanal derart zuschaltet werden, dass zumindest ein Teil des Luftstroms an dem Verdampfer vorbeigeführt wird.

Dies ermöglicht einen sicheren Betrieb der Verdampferanordnung dahingehend, dass, wenn der Verdampfer beispielsweise durch Eiskristalle oder Verschmutzung blockiert wird, der Luftstrom nach wie vor aufrechterhalten werden kann, da er an dem verstopften Verdampfer vorbeigeführt wird. Deshalb kann auch bei verstopftem Verdampfer das Klimasystem des Flugzeugs weiterbetrieben werden, wobei lediglich die Befeuchtung der Luft wegfällt.

Gemäß der vorliegenden Erfindung ist zwischen dem Hauptluftkanal und dem Bypassluftkanal ein Sicherheitsventil angeordnet, das beim Überschreiten eines vorbestimmten Drucks in dem Hauptkanal vor dem Verdampfer den Bypassluftkanal zumindest teilweise freischaltet, so dass zumindest ein Teil der Luft aus dem Hauptluftkanal um den Verdampfer herumgeführt wird.

In vorteilhafter Art und Weise kann dies einen automatischen Betrieb gewährleisten, ohne dass eine Betätigung des Sicherheitsventils durch eine Bedienperson erforderlich ist.

Gemäß einem weiteren vorteilhaften Ausführungsbeispiel der vorliegenden Erfindung ist in dem Luftkanal vor dem Verdampfer ein Diffusor vorgesehen, der den Luftstrom derart formt, dass der Luftstrom Stromlinien mit im Wesentlichen gleicher Geschwindigkeit aufweist.

In vorteilhafter Art und Weise kann dies eine möglichst homogene Belastung des Verdampfers ermöglichen, da die Stromlinien des auf den Verdampfer auftreffenden Luftstroms im Wesentlichen gleicher Geschwindigkeit sind.

Gemäß einem weiteren vorteilhaften Ausführungsbeispiel der vorliegenden Erfindung kann zwischen dem Diffusor und dem Verdampfer ein Gitter beispielsweise mit Honigwabenstruktur vorgesehen werden, um die Strömung des Luftstroms weiter gleichzurichten. Dies kann einen besonders homogenen Luftstrom erzeugen, der auf den Verdampfer auftrifft.

Gemäß einem weiteren vorteilhaften Ausführungsbeispiel der vorliegenden Erfindung ist ein Temperatursensor vorgesehen. Gemäß einem Aspekt dieses Ausführungsbeispiels ist der Temperatursensor in einer Flussrichtung des Luftstroms vor dem Verdampfer angeordnet. Der Temperatursensor kann vorteilhaft zu hohe Temperaturen in dem Luftstrom vor dem Verdampfer detektieren, beispielsweise um eine Schädigung des Verdampfers, des Klimasystems oder der Flugzeuginsassen zu vermeiden.

Gemäß einem weiteren vorteilhaften Ausführungsbeispiel der vorliegenden Erfindung weist der Verdampfer eine Durchströmungsrichtung auf. Die Durchströmungsrichtung ist eine Richtung, in der der Verdampfer von Luft mit dem geringsten Widerstand durchströmt werden kann. Gemäß einem Aspekt dieses Ausführungsbeispiels ist der Verdampfer derart in dem Hauptluftkanal angeordnet, dass die Durchströmungsrichtung des Verdampfers nicht orthogonal zu der Flussrichtung des auf den Verdampfer auftreffenden Luftstromes ist. In anderen Worten ist der Verdampfer quer zur Luftstromrichtung angeordnet. Ein Winkel zwischen der Durchströmungsrichtung des Verdampfers und dem auf den Verdampfer auftreffenden Luftstrom kann zwischen 0 und etwas weniger als 90° sein.

Gemäß einem weiteren vorteilhaften Ausführungsbeispiel der vorliegenden Erfindung kann auf dem Verdampfer ein Strömungsrichter mit einer Honigwabenstruktur vorgesehen sein, um Stromlinien des Luftstroms in den Verdampfer umzulenken. Dies ermöglicht vorteilhaft eine homogene und gleichmäßige Ausnutzung des Verdampfers, da der Luftstrom im Wesentlichen gleichmäßig über die Oberfläche des Verdampfers in den Verdampfer eingeführt wird. Totzonen, d. h. Zonen, in denen kein Luftstrom durch den Verdampfer hindurchgeführt wird, können vorteilhaft vermieden werden.

Gemäß einem weiteren vorteilhaften Ausführungsbeispiel der vorliegenden Erfindung weist die Verdampferanordnung ein Gehäuse auf. Das Gehäuse ist vorteilhaft schalldämpfend ausgestaltet.

Besonders vorteilhaft kann dieses Ausführungsbeispiel der vorliegenden Erfindung ermöglichen, dass die Verdampferanordnung auf Positionen von Schalldämpfern integriert werden kann. Der Schalldämpfer erfüllt gleichzeitig eine isolierende Wirkung, so dass der Temperaturverlust über den Verdampfer gering gehalten werden kann.

Gemäß einem weiteren vorteilhaften Ausführungsbeispiel der vorliegenden Erfindung ist der Verdampfer ein Direktverdampfer aus einem saugfähigen, porösen, anorganischen Material, wie z. B. in anorganische Kleber eingebundene Glasfasern.

In vorteilhafter Art und Weise ermöglicht dies einen soliden, leistungsfähigen Verdampfer, der zu geringen Kosten hergestellt werden kann.

Die vorliegende Erfindung betrifft ferner ein Klimasystem für ein Flugzeug, umfassend eine Verdampferanordnung nach einem der Ansprüche 1 bis 9. Das Klimasystem kann ferner Komponenten, wie beispielsweise eine Steuereinheit oder verschiedene Mischer, aufweisen.

Gemäß einem weiteren vorteilhaften Ausführungsbeispiel der vorliegenden Erfindung wird ein Verdampferpad zur Anordnung in einem Direktverdampfer in einem Klimasystem eines Flugzeugs angegeben. Das Verdampferpad umfasst ein saugfähiges Element mit einer Durchflussrichtung, welche, wie zuvor schon angesprochen, die Richtung des saugfähigen Elements ist, entlang der ein Luftstrom mit minimalem Widerstand das saugfähige Element durchfließen kann. Das saugfähige Element ist zur Anordnung in dem Direktverdampfer derart ausgestaltet, dass die Durchflussrichtung nicht unbedingt orthogonal oder nicht unbedingt senkrecht zu einer Flussrichtung einer auf das saugfähige Element auftreffenden Luftströmung ausgerichtet ist. Auch kann das saugförmige Element zur Anordnung derart ausgestaltet sein, dass Luft beispielsweise mit einem Bypasskanal an dem saugförmigen Element vorbeiführbar ist.

Gemäß einem weiteren vorteilhaften Ausführungsbeispiel der vorliegenden Erfindung kann auf dem saugfähigen Element ein Strömungsrichter mit einer Honigwabenstruktur angeordnet sein, um ein sauberes, gleichmäßiges Einlenken der Luftströmung in das saugfähige Element zu ermöglichen.

Gemäß einem weiteren vorteilhaften Ausführungsbeispiel der vorliegenden Erfindung wird ein Verfahren (Anspruch 12) zum Betreiben einer Verdampferanordnung für ein Klimasystem eines Flugzeugs angegeben, wobei gemäß des Verfahrens der Verdampfer in dem Hauptkanal derart betrieben wird, dass ein Luftstrom in dem Hauptluftkanal den Verdampfer durchströmt. Bei Bedarf, beispielsweise bei Verstopfung des Verdampfers durch Eis oder Dreck, kann der Bypasskanal derart zugeschaltet werden, dass zumindest ein Teil des Luftstroms an dem Verdampfer vorbeigeführt wird.

Auf diese Art und Weise kann vorteilhaft ein Betrieb des Klimasystems bzw. der Verdampferanordnung auch bei einem verstopften Verdampfer ermöglicht werden.

Gemäß einem weiteren vorteilhaften Ausführungsbeispiel der vorliegenden Erfindung wird eine Temperatur des Luftstromes in Luftstromrichtung vor dem Verdampfer gemessen. Diese Temperatur wird zur Temperatursteuerung in dem Klimasystem angewendet.

In vorteilhafter Art und Weise kann dies eine Überhitzung verschiedener Komponenten in dem Klimasystem vermeiden helfen.

In vorteilhafter Art und Weise ermöglicht die vorliegende Erfindung eine Befeuchtung einer Kabinenluft eines Flugzeugs mittels eines Direktverdampfers und die Integration des Direktverdampfers in das Klimasystem. Vorteilhaft ermöglicht die vorliegende Erfindung, dass ein vorhandener Einbauraum optimal genutzt wird, bzw. das Bauhöhe und -breite der Verdampferanordnung minimiert werden können. Vor allem kann gemäß der vorliegenden Erfindung bei Anwendung in einem Flugzeug ein evtl. Druckverlust , insbesondere bei einer eingeschränkten Funktionalität des Klimasystems, vermieden werden. Auch kann beispielsweise bei einem Versagen oder Teilversagen des Verdampfers sichergestellt werden, dass die Funktionalität des Klimasystems nicht beeinträchtigt wird. Insbesondere kann die vorliegende Erfindung ermöglichen, hohe Temperaturen zu detektieren und frühzeitig Gegenmaßnahmen zu unternehmen. Solch hohe Temperaturen können an Teilen oder Komponenten des Klimasystems auftreten.

Im Folgenden werden mit Verweis auf die angefügten Figuren vorteilhafte Ausführungsbeispiele der vorliegenden Erfindung weiter beschrieben.

Fig. 1 zeigt eine schematisierte Darstellung eines Ausführungsbeispiels eines Klimasystems für ein Flugzeug gemäß der vorliegenden Erfindung.

Fig. 2 zeigt eine schematisierte Schnittansicht durch ein Ausführungsbeispiel einer Verdampferanordnung gemäß der vorliegenden Erfindung, wie sie insbesondere in Klimasystemen für Flugzeuge angeordnet werden kann.

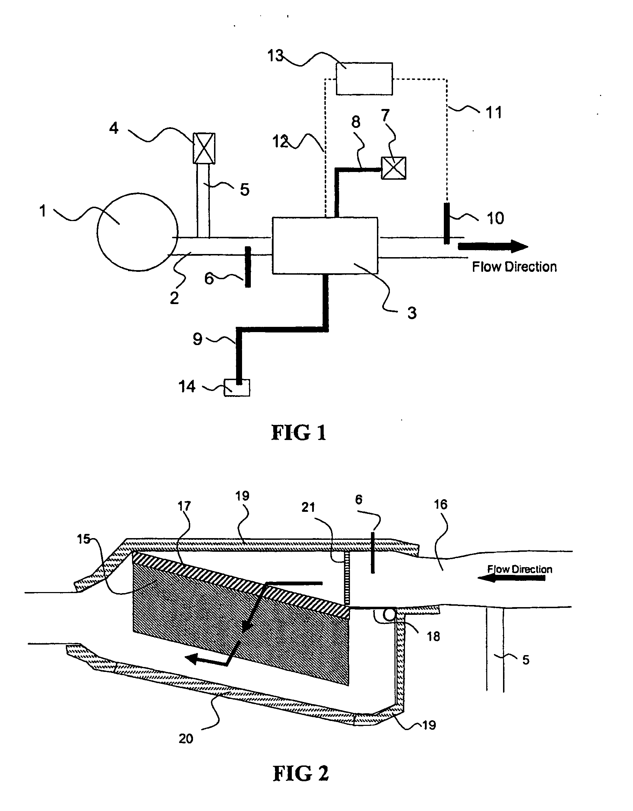

In der folgenden Beschreibung der Figuren 1 und 2 werden die gleichen oder sich entsprechende Elemente mit den gleichen Bezugsziffern bezeichnet.

Fig. 1 zeigt eine schematisierte Darstellung eines Klimasystems für ein Flugzeug gemäß einem Ausführungsbeispiel der vorliegenden Erfindung. Insbesondere zeigt Fig. 1 wie gemäß der vorliegenden Erfindung ein Direktverdampfer in das Klimasystem eines Verkehrs- oder Transportflugzeugs integriert wird. Die Bezugsziffer 1 bezeichnet eine zentrale oder dezentrale Mischereinheit 1, die zwei Luftströme miteinander vermischt, die aus rezirkulierter Luft und Außenluft bestehen können. Gemäß einer Variante dieses Ausführungsbeispiels kann die Mischereinheit 1 auch ausgestaltet sein, zwei rezirkulierende Luftströme miteinander zu vermischen. Aus der Mischereinheit 1 treten ein oder mehrere Luftströme 2 aus, deren Temperatur mittels Zumischung von Warmluft 5 eingestellt werden kann. Die Warmluft 5 kann beispielsweise aus der Triebwerkszapfluft stammen. Zur Dosierung der Warmluft 5 ist ein Ventil 4 vorgesehen. Das Ventil ist mit einer Steuereinrichtung (in Fig. 1 nicht dargestellt) verbunden, die Temperaturdaten aus der Kabine und von in Klimaräumen installierten Temperatursensoren 6 und 10 auswertet und die Ventilstellung den Temperatur-Ist- und Sollwerten anpasst. Der Temperatursensor 6 ermöglicht vorteilhaft zu hohe Temperaturen im Klimarohr, d. h. in dem Luftkanal, der zur Befeuchtereinheit 3 führt, zu detektieren. Der Temperatursensor 6 ist, wie Fig. 1 zu entnehmen ist, in der Flussrichtung des Luftstromes vor der Befeuchtereinheit 3 angeordnet.

Der weitere Temperatursensor 10, der in der Luftflussrichtung nach der Befeuchtereinheit 3 im weiterführenden Luftkanal angeordnet ist, ist neben der Temperaturmessung auch zur Luftfeuchtigkeitsmessung ausgestaltet. Vorteilhaft kann der Temperatursensor 10 auf diese Art und Weise zur Temperaturregelung eingesetzt werden, wenn die Kabinentemperatur zu träge reagiert.

Die Befeuchtereinheit 3, die beispielsweise als Direktverdampfer ausgebildet sein kann, kann das zu verdampfende Wasser aus dem bordeigenen Frischwassersystem oder einem separaten Wassersystem entnehmen. Um das Befeuchtungssystem diesbezüglich von dem Wassersystem zu trennen, ist ein automatisches Absperrventil 7 vorgesehen, welches einen Wasserfluss in einer Wasserleitung 8 zu der Befeuchtereinheit 3 steuert. Vorteilhaft ist die Wasserleitung 8 zwischen dem Absperrventil 7 und der Befeuchtereinheit 3 selbstdrainierend ausgestaltet. Beispielsweise kann dies dadurch realisiert werden, dass ein Durchmesser der Wasserleitung 8 groß genug ausgestaltet ist, z. B. mindestens ein Zoll oder das Ventil 7 zum Entlüften der Wasserleitung 8 ausgestaltet ist.

Um das gesamte Befeuchtungssystem oder Klimasystem, wie es in Fig. 1 zu sehen ist, zu desinfizieren und ein Eintreten von Wasser in das Klimasystem zu verhindern, ist die Befeuchtereinheit 3 an ein Flugzeugdrainagesystem 9 angeschlossen. Um ein Zurückfließen des Grauwassers und eine permanente Luftleckage des Klimasystems zu verhindern, kann diesbezüglich ein Schutzbauteil 14 in das Drainagesystem integriert werden. Dieses Schutzbauteil 14 verhindert das Zurückfließen des Grauwassers sowie eine permanente Luftleckage des Klimasystems. Obwohl in Fig. 1 das Schutzbauteil 14 in dem Drainagesystem, umfassend die Bauteile 9 und 14, integriert ist (das gesamte Drainagesystem ist der Übersicht halber nicht in Fig. 1 dargestellt), kann das Schutzbauteil 14 auch in der Befeuchtereinheit 3 angeordnet oder integriert sein.

Die Bezugsziffer 13 bezeichnet einen Controller, der, wie Fig. 1 zu entnehmen ist, mittels einer Leitung 11 mit dem Temperatursensor 10 verbunden ist. Ferner kann der Controller 13 mittels der Leitung 12 mit der Befeuchtereinheit 3 verbunden sein. Wie oben angegeben, kann der Temperatursensor 10 auch zur Luftfeuchtigkeitsmessung ausgestaltet werden, so dass der Controller 13 zur Steuerung der Befeuchtereinheit 3 ausgebildet sein kann. Ferner kann der Controller 13 mit dem Temperatursensor 6 verbunden sein, mit dem Ventil 4, mit dem Ventil 7 und dem Schutzbauteil 14 und die Funktion der einzelnen Elemente steuern. Vorteilhaft steuert der Controller 13 den Betrieb des Klimasystems derart, dass die Befeuchtung mittels einer geschlossenen Regelschleife geregelt wird. Darüber hinaus kann der Controller 13 mit einem Datensystem des Flugzeugs verbunden sein (in Fig. 1 nicht dargestellt) und beispielsweise Daten zur Anzeige im Cockpit weiterleiten.

Fig. 2 zeigt eine schematisierte Schnittansicht durch eine Verdampferanordnung gemäß der vorliegenden Erfindung, wie sie beispielsweise auch in einem Klimasystem, wie in Fig. 1 gezeigt ist, angewendet werden kann.

Wie Fig. 2 zu entnehmen ist, werden die von einer zentralen oder dezentralen Mischereinheit zur Verfügung gestellten Luftströme in einem Luftkanal auf eine Verdampfereinheit oder Verdampferanordnung zugeführt. Der zuführende Luftkanal weist einen Diffusor 16 auf, der beispielsweise mittels einer Einschnürung des Luftkanals ausgestaltet sein kann. In dem Luftkanal nach dem Diffusor 16 ist der Temperatursensor 6 vorgesehen. Der von dem Luftkanal zugeführte Luftstrom wird dann durch einen Luftrichter oder ein Gitter 21 hindurchgeführt. Der Diffusor 16 ist ausgestaltet, um Strömungslinien in dem Luftstrom zu erzeugen, die im Wesentlichen die gleiche Geschwindigkeit aufweisen. Das Gitter 21, das beispielsweise eine Wabenstruktur aufweisen kann, ist angeordnet, um die Strömungsgeschwindigkeiten des Luftstroms weiter gleichzurichten bzw. weiter anzupassen. Auf diese Art und Weise kann vorteilhaft erzielt werden, dass die Strömungslinien zwischen dem Gitter 21 und einem Strömungsrichter 17 im Wesentlichen parallel zueinander sind. Die Bezugsziffer 15 bezeichnet einen Direktverdampfer, der in Strömungsrichtung hinter dem Strömungsrichter 17 angeordnet ist. Gemäß einem Aspekt der vorliegenden Erfindung weist der Direktverdampfer eine bevorzugte Durchlassrichtung auf, d. h. eine Richtung, in der ein Luftstrom mit sehr geringem Widerstand durch den Direktverdampfer hindurchfließen kann. Diese Richtung ist gemäß der vorliegenden Erfindung nicht unbedingt orthogonal zu der Strömungsrichtung des Luftstroms, der durch den Diffusor 16 und das Gitter 21 gerichtet wird um lange Kontaktzeiten zwischen dem Volumenstrom und der Verdampferoberfläche . In Fig. 2 weisen der Strömungsrichter und der Direktverdampfer 15 in etwa einen Winkel von 20° zu der Flussrichtung des Luftstroms auf. Gemäß der vorliegenden Erfindung kann dieser Winkel zwischen 0° und etwa 90° sein.

Wie mittels der Pfeile in Fig. 2 angedeutet, wird die aus dem Direktverdampfer 15 ausströmende Luft in einen weiteren Luftkanal geleitet und beispielsweise in die weiteren Elemente eines Klimasystems oder direkt in die Kabine ausgeleitet.

Die Bezugsziffer 18 bezeichnet ein Sicherheitsventil. Das Sicherheitsventil 18 ist zwischen dem Luftkanal zum Zuführen des Luftstromes zu dem Luftbefeuchter 15 und einem Bypasskanal angeordnet. Dies ermöglicht beispielsweise, dass bei einem Verstopfen des Gitters 21, des Strömungsrichters 17 oder des Direktverdampfers 15 das Ventil 18 geöffnet werden kann und die Luft um diese drei Elemente herumgeführt werden kann.

Der Direktverdampfer 15 kann aus einem saugfähigen Material ausgestaltet sein, das beispielsweise den hygienischen und sicherheitsrelevanten Anforderungen im Flugzeugbau entspricht. Beispielsweise kann solches Material ein herkömmliches anorganisches Material, wie z. B. in anorganische Kleber eingebundene Glasfasern, sein. Der Direktverdampfer 15 kann aber auch aus polymeren oder metallischen Komponenten ausgestaltet sein. Überdies können polymere Werkstoffe, welche schwer brennbar, temperaturbeständig und biologisch nicht abbaubar sind, verwendet werden. Eine poröse Verdampferstruktur des Direktverdampfers 15 weist vorteilhaft Strömungskanäle von 0,5 bis 2 cm Durchmesser auf, die nicht zwangsweise orthogonal zur Eintrittsfläche verlaufen müssen.

Gemäß einem Aspekt der vorliegenden Erfindung ist der Direktverdampfer 15 schräg zur Durchströmungsrichtung angeordnet. In anderen Worten ist das saugfähige Material des Direktverdampfers 15 quer zur Durchströmungsrichtung angeordnet. Dies ermöglicht einen sehr platzsparenden Aufbau der Verdampfungsanordnung sowie eine einfache Integration in das Klimasystem. Überdies ermöglicht vorteilhaft der schräge Einbau, dass eine Querschnittsfläche des Direktverdampfers bzw. der Verdampfereinheit sehr groß ist, wodurch die Strömungsgeschwindigkeit des dadurch fließenden Luftstromes verringert wird und somit eine Gefahr des Mitreißens von Partikeln oder Tropfen verringert wird.

Wie zuvor schon angedeutet, kann am Eingang des Befeuchters ein Diffusor 16 angeordnet sein, der die Strömungsgeschwindigkeit des Luftstromes verlangsamt und gleichrichtet, um die vorhandene Oberfläche des Direktverdampfers 15 optimal auszunützen. Vorteilhaft ermöglicht die Anordnung des Diffusors 16 mit oder ohne dem Gitter 21 eine Vermeidung von ungleichen Strömungsgeschwindigkeiten, die zu Kurzflussströmungen im vorderen Einlaufbereich und zu Staugebieten im hinteren Bereich des Direktverdampfers 15 führen können. Insbesondere kann mittels Anordnung des Diffusors 16 und des Gitters 21 vermieden werden, dass sich Totbereiche, beispielsweise in dem spitzen Winkel im Endbereich des Direktverdampfers 15, ausbilden (im Bereich der Bezugsziffer 17).

Gemäß der vorliegenden Erfindung ist ein Temperatursensor 6, beispielsweise ein Heißlufttemperatursensor, hinter dem Diffusor 16 angeordnet. Vorteilhaft kann dies ermöglichen, dass eine Übertemperatur des zugeführten Luftstromes sicher detektiert werden kann. Besonders bei einer Heißlufteinspeisung kurz vor dem Verdampfer (wie beispielsweise die Leitung 5, die kurz vor der Verdampferanordnung in den Luftkanal einmündet) ist die Anordnung des Temperatursensors zwischen dem Diffusor und dem Direktverdampfer 15 vorteilhaft, da eine Vermischungsstrecke zwischen der zugeführten Heißluft und dem Luftstrom sehr kurz ist.

Um eine weiter verbesserte Durchströmung der porösen Oberfläche des Direktverdampfers 15 zu erreichen, ist vor dem Direktverdampfer 15 eine Honigwabenstruktur 17 mit ca. 2 cm Wabendurchmesser und 1 bis 2 cm Tiefe vorgesehen. Es ist darauf hinzuweisen, dass auch andere Geometrien als Honigwaben möglich sind. Die Wabenstruktur lenkt die Stromlinien des Luftstromes an der scharfen Kante schlagartig um und führt den Luftstrom durch die poröse Verdampferstruktur, d. h. durch den Direktverdampfer 15.

Das zuvor schon angesprochene Sicherheitsventil 18 kann beispielsweise mittels einer kalibrierbaren federbelasteten Klappe ausgestaltet werden. Diese soll im Falle einer Verstopfung der porösen Verdampferstruktur, d. h. einer Verstopfung des Gitters 21 oder besonders bei der Verstopfung des Strömungsrichters 17 oder des Direktverdampfers 15, die sicherheitsrelevante Funktion der Kabinenluftversorgung aufrechterhalten. Dafür kann beispielsweise die Klappe 18 ausgestaltet sein, bei Erreichen eines gewissen Drucks in dem Luftkanal den Bypasskanal freizuschalten, so dass die Luft um die Elemente 15, 17 und 21 herumgeführt wird. Insbesondere kann dadurch erreicht werden, dass die Luft nicht durch den Direktverdampfer 15 hindurchströmen muss.

Eine Verstopfung kann beispielsweise durch mit der Außenluft eingebrachtes Fremdmaterial, wie z. B. Plastikplanen, erfolgen, aber auch durch aus der Mischereinheit austretenden Schnee oder Eis. Vor allem am Boden an heißen und feuchten Tagen kann es vorkommen, dass aus der Mischereinheit Schnee austritt, der in ungünstigen Fällen den Verdampfer verstopfen könnte.

Vorteilhaft kann das Gitter 21 mit der Wabenstruktur schon derart ausgestaltet sein, dass es neben der Gleichrichtung der Strömung auch einen zusätzlichen mechanischen Schutz des Direktverdampfers 15 herstellt.

Gemäß der vorliegenden Erfindung weist die Verdampferanordnung ein Gehäuse 19 auf, in dem eine Wartungsklappe 20 vorgesehen ist. Sowohl das Gehäuse 19 als auch die Wartungsklappe 20 können mit einem Schallschutz versehen. Auf diese Art und Weise wird ermöglicht, dass die Verdampferanordnung auf Positionen von Schalldämpfern integriert werden kann. Die Schalldämmung kann gleichzeitig eine isolierende Wirkung aufweisen, so dass ein Temperaturverlust über der Verdampfungsanordnung gering gehalten werden kann. Es ist jedoch auch darauf hinzuweisen, dass Ausführungen denkbar sind, bei der die Verdampferanordnung nur auf einer Seite mit einem Schalldämpfer oder einer Wärmeisolierung versehen werden kann.

Die Wartungsklappe 20 kann vorteilhaft ein einfaches Austauschen des Direktverdampfers 15 und anderer Bauteile ermöglichen.

Wegen der sehr engen Einbausituation in der Umgebung von der Mischereinheit können auch zwei oder mehrere Temperaturzonen in einer gemeinsamen Verdampfereinheit integriert werden. Hierbei sind vorteilhaft die zu befeuchtenden Volumenströme voneinander getrennt und z. B. übereinander oder untereinander oder nebeneinander angeordnet. Diese Kombination von Temperaturzonen in einer Einheit birgt den Vorteil, dass die Anzahl der mechanischen und hydraulischen Schnittstellen verringert wird.

Gemäß der vorliegenden Erfindung kann damit ein Klimasystem bzw. eine Verdampferanordnung angegeben werden, die in der Lage sind, Luftfeuchtigkeiten von 20 bis 60 % RH bei Raumtemperatur zu erzeugen, ohne weitere Wärmelast in die Kabine zuzuführen. Durch die Erhöhung der Luftfeuchtigkeit kann die thermische Behaglichkeit der Kabinenluft während des Fluges verbessert werden.

Vorteilhaft kann die Verdampferanordnung gemäß der vorliegenden Erfindung in ein Klimasystem zur Bildung eines erfindungsgemäßen Klimasystems integriert werden. Vorteilhaft ermöglicht dies eine Reduzierung des Einbauraums, wodurch auch Höhe und Breite minimiert werden können. Durch das Vorsehen des Bypasskanals kann darüber hinaus eine sehr sichere Anordnung angegeben werden, da auch bei einer Funktionsstörung des Direktverdampfers eine Funktionalität des gesamten Klimasystems nicht beeinträchtigt wird.

Obwohl die vorliegende Erfindung anhand einer Befeuchteranordnung in einem Klimasystem für ein Flugzeug beschrieben worden ist, ist darauf hinzuweisen, dass die vorliegende Erfindung auch im Fahrzeugbau allgemein Anwendung finden kann.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verdampferanordnung für ein Klimasystem eines Flugzeuges, umfassend:
einen Hauptluftkanal;
einen Bypassluftkanal; und
einen Verdampfer (15);
wobei der Verdampfer (15) in dem Hauptluftkanal derart angeordnet ist, dass ein Luftstrom in dem Hauptluftkanal den Verdampfer (15) durchströmt;
wobei der Bypassluftkanal derart zuschaltbar ist, dass bei Bedarf zumindest ein Teil des Luftstroms an dem Verdampfter (15) vorbeigeführt wird;
**dadurch gekennzeichnet, daß** zwischen dem Hauptluftkanal und dem Bypassluftkanal ein Sicherheitsventil (18) derart angeordnet ist, dass bei Überschreiten eines Drucks in dem Hauptkanal vor dem Verdampfer (15) zumindest ein Teil des Luftstroms in den Bypassluftkanal geleitet wird.

2. Verdampferanordnung nach Anspruch 1,
wobei in dem Luftkanal vor dem Verdampfer (15) ein Diffusor (16) vorgesehen ist;
wobei der Diffusor (16) den Luftstrom derart formt, dass der Luftstrom Stromlinien mit im wesentlichen gleicher Geschwindigkeit aufweist.

3. Verdampferanordnung nach Anspruch 2,
wobei zwischen dem Diffusor (16) und dem Verdampfer (15) ein Gitter (21) vorgesehen ist, um die Strömung des Luftstroms weiter gleichzurichten.

4. Verdampferanordnung nach einem der Ansprüche 1 bis 3,
wobei ein Temperatursensor (6) vorgesehen ist;
wobei der Temperatursensor (6) in einer Flussrichtung des Luftstromes vor dem Verdampfer (15) angeordnet ist.

5. Verdampferanordnung nach einem der Ansprüche 1 bis 4,
wobei der Verdampfer (15) eine Durchströmungsrichtung aufweist; und
wobei die Durchströmungsrichtung nicht orthogonal zu der Flussrichtung des auf den Verdampfer auftreffenden Luftstromes ist.

6. Verdampferanordnung nach Anspruch 5,
wobei in der Flussrichtung des Luftstromes auf dem Verdampfer (15) ein Strömungsrichter (17) mit Honigwabenstruktur angeordnet ist, um Stromlinien des Luftstromes umzulenken und in den Verdampfer (15) einzuleiten.

7. Verdampferanordnung nach einem der Ansprüche 1 bis 6, ferner umfassend:
ein Gehäuse (19,20);
wobei das Gehäuse (19,20) schalldämpfend ausgeschaltet ist.

8. Verdampferanordnung nach einem der Ansprüche 1 bis 7,
wobei der Verdampfer (15) ein Direktverdampfer aus einem saugfähigen, porösen anorganischen Material ist.

9. Klimasystem für ein Flugzeug, umfassend:
eine Verdampferordnung nach einem der Ansprüche 1 bis 8.

10. Verdampferanordnung nach einem der Ansprüche 1 bis 8, ferner aufweisend
ein Verdampferpad zur Verwendung in einem Direktverdampfer in einem Klimasystem eines Flugzeuges,
wobei der Verdampfer (15) als ein saugfähiges Element (15) mit einer
Durchflussrichtung ausgeführt ist;
wobei das saugfähige Element (15) zur Anordnung in dem Direktverdampfter derart ausgestaltet ist, dass ein Luftstrom in einem Hauptluftkanal das saugfähige Element (15) durchströmt; und
wobei das saugfähige Element (15) zur Anordnung in dem Direktverdampfer derart ausgestaltet ist, dass ein Bypasskanal des Direktverdampfers derart zuschaltbar ist, dass bei Bedarf zumindest ein Teil des Luftstroms an dem saugfähigen Element (15) vorbeigeführt wird.

11. Verdampferanordnung nach Anspruch 10,
wobei vor dem saugfähigen Element (15) ein Strömungsrichter (17) mit einer Honigwabenstruktur angeordnet ist; und
wobei das saugfähigen Element (15) zur Anordnung in dem Direktverdampfer derart ausgestaltet ist, dass die Durchflussrichtung nicht orthogonal zu einer Flussrichtung einer auf das saugfähige Element (15) auftreffenden Luftströmung ausgerichtet ist.

12. Verfahren zum Betreiben einer Verdampferanordnung eines Klimasystems eines Flugzeuges, wobei die Verdampferanordnung:
einen Hauptluftkanal,
einen Bypassluftkanal und
einen Verdampfer (15) umfasst,
bei dem das Verfahren folgende Schritte umfasst:
Betreiben des Verdampfers in dem Hauptluftkanal derweise, dass ein Luftstrom in dem Hauptluftkanal den Verdampfer (15) durchströmt;
**dadurch gekennzeichnet, daß** der Bypassluftkanal über ein Sicherheitsventil zugeschaltet wird, so dass zumindest einen Teil des Luftstroms an dem Verdampfer (15) vorbeigeführt wird, wenn ein Druck in dem Hauptluftkanal vor dem Verdampfer (15) überschritten wird.

13. Verfahren nach Anspruch 12, ferner umfassend folgenden Schritt:
Messen einer Temperatur des Luftstromes in Luftstromrichtung vor dem Verdampfer (15);
wobei die Temperatur zur Temperatursteuerung in dem Klimasystem angewendet wird.

## Claims

1. An evaporator arrangement for an air conditioning system of an aircraft, comprising:
a main air conduit;
a bypass air conduit; and
an evaporator (15);
wherein the evaporator (15) is arranged in the main air conduit such that an airflow in the main air conduit flows through the evaporator (15);
wherein the bypass air conduit is connectable such that if required at least part of the airflow bypasses the evaporator (15);
**characterized in that** a safety valve is arranged between the main air conduit and the bypass air conduit such that if a threshold pressure in the main air conduit upstream of the evaporator (15) is exceeded, at least part of the airflow is fed to the bypass air conduit.

2. The evaporator arrangement of claim 1,
wherein a diffuser (16) is provided in the main air conduit upstream of the evaporator (15);
wherein the diffuser (16) forms the airflow in such a way that the airflow comprises airflow lines of essentially identical speed.

3. The evaporator arrangement of claim 2,
wherein a grid (21) is provided between the diffuser (16) and the evaporator (15) is provided to further adjust the speed of the airflow lines.

4. The evaporator arrangement of one of claims 1 to 3,
wherein a temperature sensor (6) is provided;
wherein the temperature sensor (6) is arranged in a flow direction of the airflow upstream of the evaporator (15).

5. The evaporator arrangement of one of claims 1 to 4,
wherein the evaporator (15) has a flow-through direction; and
wherein the flow-through direction is not orthogonal to the flow direction of the airflow impinging on the evaporator (15).

6. The evaporator arrangement of claim 5,
wherein an air deflector (17) with a honeycomb structure is arranged on the evaporator (15) in the flow direction of the airflow to deflect flow lines of the airflow and feed them to the evaporator (15).

7. The evaporator arrangement of one of claims 1 to 6, further comprising:
a housing (19,20);
wherein the housing (19,20) is adapted to be sound absorbent.

8. The evaporator arrangement of one of claims 1 to 7,
wherein the evaporator (15) is a direct evaporator comprising an absorbent, porous, inorganic material.

9. An air conditioning system for an aircraft, comprising:
an evaporator arrangement of one of claims 1 to 8.

10. The evaporator arrangement of one of claims 1 to 8, further comprising
an evaporator pad for use in a direct evaporator in an air conditioning system of an aircraft,
wherein the evaporator (15) is designed as an absorbent element (15) with a flow-through direction;
wherein the absorbent element (15) is adapted such that when the absorbent element (15) is arranged in the direct evaporator, an airflow in the main air conduit flows through the absorbent element (15); and
wherein the absorbent element (15) is adapted such that when the absorbent element (15) is arranged in the direct evaporator, a bypass conduit of the direct evaporator is connectable such that if required at least part of the airflow bypasses the absorbent element (15).

11. The evaporator arrangement of claim 10,
wherein an air deflector (17) with a honeycomb structure is arranged upstream of the absorbent element (15).
wherein the absorbent element (15) is adapted such that when the absorbent element (15) is arranged in the direct evaporator, the flow-through direction is not orthogonal to a flow direction of the airflow impinging on the absorbent element (15).

12. A method for operating an evaporator arrangement of an air conditioning system of an aircraft, wherein the evaporator arrangement comprises:
a main air conduit;
a bypass air conduit; and
an evaporator (15);
wherein the method comprises the steps of:
operating the evaporator in the main air channel such that an airflow in the main air conduit flows through the evaporator (15);
**characterized in that** the bypass air conduit is connected via a safety valve, so that at least a part of the airflow bypasses the evaporator (15), if a threshold pressure in the main air conduit upstream of the evaporator (15) is exceeded.

13. The method of claim 12, further comprising the step of:
measuring a temperature of the airflow upstream of the evaporator (15);
wherein the temperature is used for temperature control in the air conditioning system.

## Revendications

1. Agencement d'évaporateur pour un système de climatisation d'un avion, comprenant :
un canal d'air principal ;
un canal d'air de bypass ; et
un évaporateur (15) ;
l'évaporateur (15) étant disposé dans le canal d'air principal de telle sorte qu'un flux d'air dans le canal d'air principal balaye l'évaporateur (15) ;
le canal d'air de bypass étant commutable de telle sorte que, en cas de besoin, au moins une partie du flux d'air est guidée devant l'évaporateur (15) ;
**caractérisé en ce qu'**une soupape de sûreté (18) est disposée entre le canal d'air principal et le canal d'air de bypass de telle sorte que, en cas de dépassement par le haut d'une pression dans le canal principal en amont de l'évaporateur (15), au moins une partie du flux d'air est dirigée dans le canal d'air de bypass.

2. Agencement d'évaporateur suivant la revendication 1, dans lequel
un diffuseur (16) est prévu dans le canal d'air en amont de l'évaporateur (15) ;
le diffuseur (16) forme le flux d'air de telle sorte que le flux d'air présente des lignes d'écoulement d'une vitesse essentiellement égale.

3. Agencement d'évaporateur suivant la revendication 2, dans lequel une grille (21) est prévue entre le diffuseur (16) et l'évaporateur (15) en vue d'un redressement supplémentaire de l'écoulement du flux d'air.

4. Agencement d'évaporateur suivant l'une des revendications 1 à 3, dans lequel
un capteur de température (6) est prévu ;
le capteur de température (6) est disposé dans une direction du flux d'air en amont de l'évaporateur (15).

5. Agencement d'évaporateur suivant l'une des revendications 1 à 4, dans lequel
l'évaporateur (15) présente une direction de balayage ; et
la direction de balayage n'est pas orthogonale à la direction du flux d'air frappant l'évaporateur.

6. Agencement d'évaporateur suivant la revendication 5, dans lequel un redresseur d'écoulement (17) avec une structure en nid d'abeilles est disposé dans la direction du flux d'air sur l'évaporateur (15), afin de dévier des lignes d'écoulement du flux d'air et de les diriger dans l'évaporateur (15).

7. Agencement d'évaporateur suivant l'une des revendications 1 à 6, comprenant en outre un carter (19, 20) ; le carter (19, 20) ayant une configuration insonorisante.

8. Agencement d'évaporateur suivant l'une des revendications 1 à 7, dans lequel l'évaporateur (15) est un évaporateur direct en un matériau inorganique poreux, absorbant.

9. Système de climatisation pour un avion comprenant un agencement d'évaporateur suivant l'une des revendications 1 à 8.

10. Agencement d'évaporateur suivant l'une des revendications 1 à 8, présentant en outre un pad d'évaporateur pour l'utilisation dans un évaporateur direct dans un système de climatisation d'un avion, agencement dans lequel
l'évaporateur (15) est réalisé sous forme d'élément absorbant (15) avec une direction de passage ;
l'élément absorbant (15) est configuré pour l'agencement dans l'évaporateur direct de telle sorte qu'un flux d'air dans un canal d'air principal balaye l'élément absorbant (15) ; et
l'élément absorbant (15) est configuré pour l'agencement dans l'évaporateur direct de telle sorte qu'un canal de bypass de l'évaporateur direct est commutable de sorte que, en cas de besoin, au moins une partie du flux d'air est guidée devant l'élément absorbant (15).

11. Agencement d'évaporateur suivant la revendication 10, dans lequel,
un redresseur d'écoulement (17) avec une structure en nid d'abeilles est disposé devant l'élément absorbant (15) ; et
l'élément absorbant (15) est configuré pour l'agencement dans l'évaporateur direct de telle sorte que la direction de passage n'est pas orientée de façon orthogonale à la direction d'un écoulement d'air frappant l'élément absorbant (15).

12. Procédé de fonctionnement d'un agencement d'évaporateur d'un système de climatisation d'un avion, l'agencement d'évaporateur comprenant :
un canal d'air principal,
un canal d'air de bypass et
un évaporateur (15), le procédé comprenant les étapes suivantes :
fonctionnement de l'évaporateur dans le canal d'air principal de manière qu'un flux d'air dans le canal d'air principal balaye l'évaporateur (15) ;
**caractérisé en ce que**
le canal d'air de bypass est commuté par l'intermédiaire d'une soupape de sûreté si bien qu'au moins une partie du flux d'air est guidée devant l'évaporateur (15), lorsqu'une pression dans le canal d'air principal est dépassée par le haut en amont de l'évaporateur (15).

13. Procédé suivant la revendication 12, comprenant en outre l'étape suivante :
mesure d'une température du flux d'air dans la direction d'écoulement d'air en amont de l'évaporateur (15) ;
la température étant utilisée pour le contrôle de température dans le système de climatisation.
